# EUROPÄISCHE PATENTSCHRIFT

(11) **EP 1 949 318 B1**
(45) Veröffentlichungstag und Bekanntmachung des Hinweises auf die Patenterteilung: **13.08.2014**
(21) Anmeldenummer: 06807793.2
(22) Anmeldetag: 09.11.2006
(51) Int. Cl.: G06Q 10/00, B65H 19/10

(54) **VERFAHREN ZUR ERSTELLUNG UND VERWENDUNG EINES BEGLEITDOKUMENTS EINES IN EINER DRUCKMASCHINE ZU BEDRUCKENDEN BEDRUCKSTOFFES**
METHOD FOR CREATING AN ACCOMPANYING DOCUMENT FOR A SUBSTRATE WHICH IS TO BE PRINTED IN A PRINTING MACHINE
PROCEDE D'ETABLISSEMENT DE CE DOCUMENT D'ACCOMPAGNEMENT D'UNE MATIERE D'IMPRESSION A IMPRIMER DANS UNE MACHINE D'IMPRESSION

(30) Priorität: 16.11.2005 DE 102005054496
(43) Veröffentlichungstag der Anmeldung: 30.07.2008
(73) Patentinhaber: Koenig & Bauer Aktiengesellschaft, 97080 Würzburg (DE)
(72) Erfinder: LEHRIEDER, Erwin, Paul, Josef, 97253 Gaukönigshofen (DE)
(86) Internationale Anmeldenummer: PCT/EP2006/068294
(87) Internationale Veröffentlichungsnummer: WO 2007/057345

(56) Entgegenhaltungen:
- WO-A-2005/102719
- US-B1- 6 409 401

## Beschreibung

Die Erfindung betrifft ein Verfahren zur Erstellung und Verwendung eines einen in einer Druckmaschine zu verarbeitenden Bedruckstoff begleitenden Begleitdokuments gemäß dem Oberbegriff des Anspruchs 1.

Das Dokument GB 23 33 207 A offenbart, den Wickelkern einer in einer Papierfabrik produzierten Papierrolle mit einem RFID-Tag (engl.: radio frequency identification tag = dt.: Etikett zur Funk-Erkennung) zu versehen, um eine Auslieferung der Papierrolle von der Papierfabrik an eine diese Papierrolle verdruckende Druckmaschine sowie den Gebrauch dieser Papierrolle an der Druckmaschine zu überwachen, wobei das an einer in der Papierfabrik produzierten Papierrolle angebrachte RFID-Tag mit Daten beschrieben wird, nachdem die Papierrolle in der Papierfabrik versandfertig verpackt worden ist, wobei diese Daten die Papierrolle in ihren konstruktiven Produkteigenschaften beschreiben, z. B. Länge, Breite, Grammatur, und Angaben zu ihrer Auslieferung enthalten, z. B. Hersteller, Produktnummer, Kunde und Lieferanschrift, wobei diese Daten auf dem Weg der Papierrolle von der Papierfabrik bis zur Druckmaschine wiederholt auslesbar und in einem elektronischen Datennetzwerk auswertbar sind.

Die WO 2005/077797 A2 betrifft ein Verfahren zur Lagerung von unvorbereiteten und vorbereiteten Materialrollen einer bahnverarbeitenden Maschine in einem Lager, wobei ein Barcode an den Materialrollen einem Materialflusssystem Daten bereitstellt.

Die WO 2004/075103 A1 betrifft eine Papierrolle mit einer um eine Hülse gewickelten Papierbahn, wobei die Hülse einen RFID-Tag aufweist, wobei der RFID-Tag Daten mit einem die Papierrolle transportierenden Handhabungsgerät austauscht.

Die WO 98/28213 A1 beschreibt eine Papierrolle mit einem Codeträger, der als eine elektronische Baueinheit mit einem Datenspeicher ausgebildet ist, dessen Daten mit einem als elektronische Baueinheit ausgebildeten Schreib- und Lesekopf in einem Frequenzbereich von z. B. 70 kHz durch induktive Kopplung, d. h. durch Ausbildung eines magnetischen Wechselfeldes zwischen dem Codeträger und einem zugehörigen Schreib-und Lesekopf, berührungslos ausgetauscht werden können, wobei der Codeträger induktiv codierbar und lesbar ist. Auf dem Prinzip der induktiven Kopplung basierende Codeträger erfordern zum Erreichen eines angemessenen Wirkungsgrades der Kopplung, d. h. einer mindestens zu erreichenden Intensität der Durchflutung mit dem Energie und/oder Daten übertragenden Magnetfeld, ein verhältnismäßig großes Bauvolumen sowie ein Aufeinander-Ausgerichtetsein von Codeträger und dem zugehörigen Schreib-und Lesekopf und sind wegen des mit zunehmender Distanz zwischen dem Codeträger und einem zugehörigen Schreib- und Lesekopf rapiden Intensitätsabfalls in der induktiven Kopplung dennoch nur für relativ kurze Übertragungsstrecken von zumeist deutlich weniger als 1 m verwendbar, was jedoch alles erhebliche Nachteile für ein Logistiksystem sind, das zur Papierrollenlogistik verwendet werden soll.

Die DE 100 43 752 A1 betrifft ein Verfahren und ein System zum Management von zwischen Gliedern einer Logistikkette stattfindenden Logistikvorgängen und zur Sendungsverfolgung entlang der Logistikkette. Es ist die Verwendung von wiederholt beschreibbaren RFID-Transpondern vorgesehen, die mittels zugeordneten RFID-Schreib-/Lesegeräten ausgelesen und beschrieben werden. Auf Grundlage von Avisierungsdaten und aus einem jeweiligen RFID-Transponder ausgelesenen Daten werden Logistikvorgänge bestätigt und quittiert.

Die DE 10 2004 003 859 A1 betrifft ein Verfahren zum Steuern eines Prozesses, wobei Daten in einem Transponder gespeichert und/oder von einem Transponder gelesen werden, wobei u. a. auch ein Verfahren zum Handhaben einer Ware beschrieben wird, wobei der Ware ein Transponder zugeordnet ist, wobei in dem Transponder Daten über die Ware und/oder über die Handhabung der Ware gelesen und/oder gespeichert werden.

Durch die WO 03/080484 A1 ist ein Gütertransportsystem mit einem Netz von Gleisen mit einer Anzahl von auf den Gleisen bewegbaren Transportwagen bekannt, wobei an den Gleisen angeordnete Schreib-/Leseeinrichtungen zum berührungslosen Schreiben und Lesen von Daten auf Datenträgern vorgesehen sind, wobei jeweils wenigstens einer der Datenträger an einem Transportwagen angeordnet ist, wobei auf jedem Datenträger eine jeden Transportwagen eindeutig identifizierende Bezeichnung gespeichert ist und/oder der Datenträger in der Art eines Transponders ausgebildet ist, wobei der Transportwagen vorzugsweise mindestens eine Materialrolle zu einem Rollenwechsler einer bahnverarbeitenden Maschine transportiert.

Durch die WO 2005/102719 A1 ist ein Thermotransferdrucker zum Bedrucken von RFID-Etiketten aufweisenden Druckmedien bekannt, wobei der Thermotransferdrucker in Abhängigkeit von in einem Datenspeicher des RFID-Etiketts gespeicherten Informationen gesteuert werden kann. Im RFID-Etikett ist eine Kennung gespeichert, die das jeweilige RFID-Etikett eindeutig identifiziert. Sobald das Druckmedium mit dem RFID-Etikett eine RFID-Leseeinheit passiert, wird das Druckmedium von der RFID-Leseeinheit erfasst. Dazu sendet die RFID-Leseeinheit kontinuierlich Signale aus, die das RFID-Etikett zum Zurücksenden seiner Kennung auffordert.

Die US 6,409,401 B1 betrifft einen transportablen Drucker mit einem RFID-Encoder, der Informationen erfasst, welche in einem bedruckbaren, einen RFID aufweisenden Medium, z. B. einem Papierstreifen, gespeichert sind. Die im RFID gespeicherten Daten betreffen z. B. Informationen, die einer Identifizierung des betreffenden Mediums dienen.

Der Erfindung liegt die Aufgabe zugrunde, ein Verfahren zur Erstellung und Verwendung eines einen in einer Druckmaschine zu verarbeitenden Bedruckstoff begleitenden Begleitdokuments zu schaffen, wobei durch die im Datensatz des RFID-Tags gespeicherten Daten das Risiko einer Produktionsstörung minimiert wird.

Die Aufgabe wird erfindungsgemäß durch die Merkmale des Anspruchs 1 gelöst.

Die mit der Erfindung erzielbaren Vorteile bestehen insbesondere darin, dass eine einen RFID-Tag aufweisende Handelseinheit, die eine bestimmte, begrenzte Menge eines bestimmten Bedruckstoffes bereitstellt, z. B. eine Papierrolle oder ein Stapel von Druckbogen, nicht nur identifiziert, auf ihrem Transportweg überwacht und verwaltet werden kann, sondern dass an der Handelseinheit ausgeführte Prozessschritte, z. B. eine Veränderung von Angaben zu ihrer Auslieferung, ein Entfernen von diese Handelseinheit verpackendem Verpackungsmaterial oder ähnliches, und/oder insbesondere ein Verbrauch des mit dieser Handelseinheit bereitgestellten Bedruckstoffes unmittelbar in dem diese Handelseinheit begleitenden Datensatz protokolliert wird, da der Datensatz auch noch nach dem Versand durch den Produzenten des Bedruckstoffes durch dazu autorisierte und/oder legitimierte Datensender veränderbar ist. In einem Speicher des an der Handelseinheit des Bedruckstoffes angebrachten RFID-Tags wird somit vorzugsweise der gesamte Werdegang dieser Handelseinheit des Bedruckstoffes durch ein Fortschreiben des ihm zugeordneten Datensatzes protokolliert. Die vorzugsweise fortlaufende Aktualisierung des Datensatzes kann durch eine Ergänzung und/oder Änderung seiner Daten erfolgen. Das vorgeschlagene Begleitdokument eines in einer Druckmaschine zu bedruckenden Bedruckstoffes sowie das Verfahren zur Erstellung eines derartigen Begleitdokuments können gut verwendet werden, wenn es darum geht, einen mit dem Bedruckstoff auszuführenden Druckprozess und/oder die Qualität des Bedruckstoffes und/oder der daraus produzierten Druckerzeugnisse zu verbessern.

Die im Datensatz enthaltenen Daten können in ihrer Syntax und Semantik einem im Logistikwesen verwendeten Standard entsprechen, sodass der Datensatz von mehreren, insbesondere auch verschiedenen in den Datenaustausch einzubindenden Unternehmen, vorzugsweise sogar länderübergreifend, codierbar, auslesbar und interpretierbar ist. Im Logistikwesen sind bereits auch für die Papier herstellende und die Papier verarbeitende Industrie entlang des Materialflusses z. B. von der Papierfabrik zu einer Druckerei geltende Datenstandards entwickelt worden, z. B. der papiNet-Standard, z. 8. in seiner Version 2.20 vom Januar 2004, sodass der Datensatz, der in einem an der Handelseinheit des Bedruckstoffes angebrachten RFID-Tag gespeichert ist, in ein zumindest die den Bedruckstoff versendende Papierfabrik und die den Bedruckstoff empfangende Druckerei einbeziehendes Datennetzwerk eingebunden werden kann.

Die Verwendung eines zur Datenübertragung eine elektromagnetische Mikrowelle verwendenden RFID-Tags stellt dabei die in der mit einem Bedruckstoff verbundenen Handhabungskette erforderliche Flexibilität in der Anordnung der an der Datenübertragung beteiligten Komponenten sicher, wobei diese Komponenten, insbesondere soweit sie den RFID-Tag betreffen, mit einem geringen Bauvolumen und sehr kostengünstig ausgeführt werden können und eine in der Lagerlogistik erforderliche Reichweite der zwischen dem RFID-Tag und einer zugehörigen Schreib-/Lesestation bestehenden Übertragungsstrecke ermöglicht.

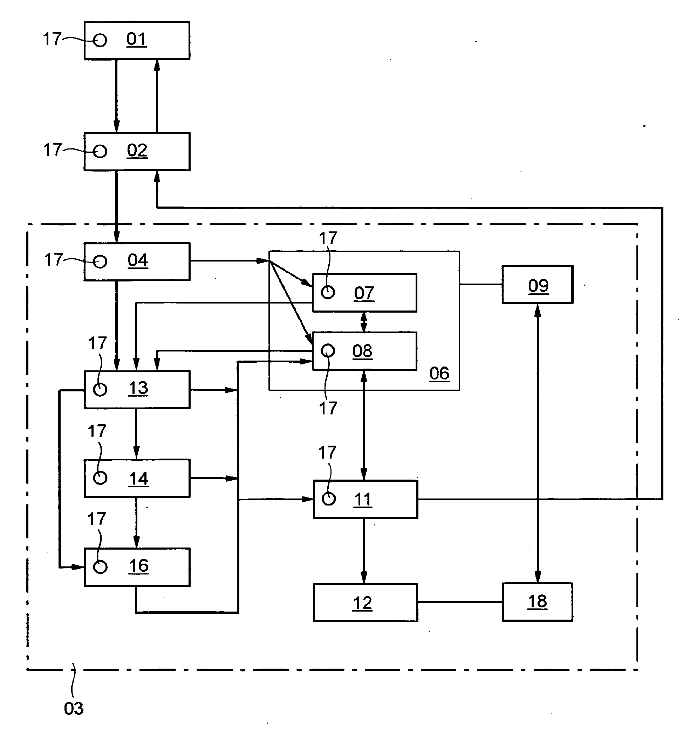

Ein Ausführungsbeispiel der Erfindung ist in der Zeichnung dargestellt und wird im Folgenden näher beschrieben.

Die einzige Figur zeigt ein Blockdiagramm zur Darstellung einer mit einer Handelseinheit oder mit einem Bedruckstoff verbundenen Handhabungskette.

Große Druckereien, insbesondere solche mit auflagestarken Druckprodukten, z. B. Zeitungsdruckereien, haben einen großen Bedarf an Bedruckstoff für den Betrieb ihrer zumeist mehreren Druckmaschinen. Im Folgenden wird die Erfindung am Beispiel einer mindestens eine Rollenrotationsdruckmaschine betreibenden Druckerei beschrieben, sodass der benötigte Bedruckstoff jeweils als Rolle, vorzugsweise als Papierrolle, bereitgestellt wird. Alternativ oder zusätzlich kann die Druckerei mindestens eine Bogendruckmaschine betreiben, sodass der für diese Druckmaschine benötigte Bedruckstoff jeweils als Stapel von Druckbogen bereitzustellen ist. Der Bedruckstoff besteht jeweils vorzugsweise aus Papier, Karton, Pappe oder einer Folie. Die Druckerei bezieht den Bedruckstoff jeweils von einem den Bedruckstoff herstellenden Unternehmen, z. B. von einer Papierfabrik. Große Druckereien weisen z. B. eine Vielzahl von insbesondere auch unabhängig voneinander betreibbaren, vorzugsweise schnelllaufenden Druckmaschinen mit einer Produktionsgeschwindigkeit von z. B. 80.000 und mehr Druckexemplaren pro Stunde auf und können einen Bedarf von wöchentlich z. B. 5.000 oder mehr Papierrollen haben. Derartige Druckmaschinen sind z. B. als Druckanlagen mit mehreren, jeweils mehrere Drucktürme umfassende Sektionen ausgebildet, wobei die Sektionen der Druckanlage unabhängig voneinander betreibbar sind.

In der bevorzugten Ausführung wird der Druckerei der Bedruckstoff von der Papierfabrik in der Handelseinheit Rolle angeliefert. Die Anlieferung kann mit unterschiedlichen Transportmitteln erfolgen, z. B. per LKW, Bahn oder Schiff. In einem Wareneingang der Druckerei wird das den Bedruckstoff anliefernde Transportmittel mit einer Fördereinrichtung z. B. automatisiert entladen und in einem zur Druckerei gehörenden Lager gelagert. Das Lager der Druckerei ist vorrangig dazu ausgebildet, einen für einen bestimmten Produktionszeitraum erforderlichen Bedarf an Bedruckstoff aufzunehmen und den Bedruckstoff an der zumindest einen Druckmaschine oder an mehreren oder an jeder der Druckmaschinen jeweils produktionsgerecht zur Verfügung zu stellen. Das Lager kann vorteilhafterweise verschiedene Bereiche aufweisen, z. B. ein Hauptlager und ein Pufferlager, wobei das Pufferlager vorzugsweise in direkter Zuordnung zu einer bestimmten Druckmaschine steht, wobei der Bedruckstoff in dem Pufferlager nur relativ kurzzeitig zwischengelagert wird, nämlich nur bis zur Ausführung einer an der zugeordneten Druckmaschine geplanten zeitnahen Produktion. Das Pufferlager kann z. B. als ein Lager für den Bedarf an Bedruckstoff für einen einzigen Tag oder sogar nur für wenige Stunden ausgelegt sein. Das Hauptlager ist hingegen zur Aufnahme einer im Vergleich zum Pufferlager zumeist erheblich größeren Menge von Handelseinheiten des Bedruckstoffes ausgelegt und z. B. in Form eines Hochregallagers ausgebildet. Insbesondere im Hauptlager erhalten die angelieferten Papierrollen auch Gelegenheit, sich hinsichtlich des Raumklimas im Druckereilokal zu konditionieren, d. h. sich vor ihrer Verarbeitung an eine im Drucksaal der Druckerei herrschende Temperatur und Feuchtigkeit anzupassen, wobei für diesen das Papier betreffenden klimatischen Anpassungsprozess zehn und mehr Stunden vorgesehen sein sollten. Das Befördern der Handelseinheiten des Bedruckstoffes innerhalb der Druckerei, z. B. vom Wareneingang zum Hauptlager und/oder vom Hauptlager zum Pufferlager und/oder vom Pufferlager zum jeweiligen Rollenwechsler einer Druckmaschine kann jeweils z. B. mittels eines schienengebundenen oder nicht-schienengebundenen fahrerlosen Transportsystems oder eines bemannten oder unbemannten Flurfördermittels, z. B. eines Staplerfahrzeugs, erfolgen.

Eine Papierrolle oder ein Stapel von Druckbogen wird von der Papierfabrik üblicherweise in einer den Bedruckstoff umschließenden Verpackung angeliefert, um den Bedruckstoff, d. h. das zu bedruckende Papier, auf seinem Weg von der Papierfabrik zur Druckerei vor Beschmutzung oder Beschädigung zu schützen. Das Transportgewicht der Handelseinheit Papierrolle oder Stapel schließt das Gewicht der Verpackung ein. Die Verpackung wird an einer in der Druckerei angeordneten Auspackstation entfernt, bevor der Bedruckstoff der Druckmaschine direkt oder z. B. über das Pufferlager zugeführt wird. Häufig wird der Bedruckstoff vor seiner Bereitstellung an der Druckmaschine an einer Wiegestation gewogen, um dessen Nettogewicht festzustellen. Die Auspackstation und die Wiegestation sind Beispiele für Komponenten eines Bereichs in der Druckerei, der der Produktionsvorbereitung zugeordnet ist, d. h. in dem der Bedruckstoff für seinen Einsatz in der bevorstehenden, mit der jeweiligen Druckmaschine auszuführenden Produktion bereit gemacht wird, wobei sich der Begriff der Produktion insbesondere auf das Bedrucken des Bedruckstoffes bezieht und vorzugsweise ein dem eigentlichen Bedrucken vorausgehendes Einziehen des Bedruckstoffes in die Druckmaschine und/oder auch ein mit dem Bedruckstoff ausgeführtes Freifahren der Druckmaschine von Druckfarbe einschließen kann. Während der Produktion wird der Bedruckstoff z. B. von der Papierrolle abgewickelt.

Je nach Ausführung der eingesetzten Rollenrotationsdruckmaschine sowie des herzustellenden Druckproduktes können unterschiedliche Papierrollen zum Einsatz kommen, wobei sich die Papierrollen z. B. hinsichtlich ihrer geometrischen Abmessungen, insbesondere ihrer axialen Länge und/oder ihres Durchmessers, der Menge bzw. Länge des auf der jeweiligen Rolle gewickelten Bedruckstoffes, der Papierqualität und/oder der Grammatur des Papiers unterscheiden. An der jeweiligen Rollenrotationsdruckmaschine kann mindestens ein Rollenwechsler zur Aufnahme der aus dem Lager zugeführten Papierrolle vorgesehen sein. Der Rollenwechsler weist z. B. mindestens ein Paar von Tragarmen mit einem Einstellmechanismus für deren Positionierung auf, mit welchem nach einer ausgeführten Anpassung Papierrollen unterschiedlicher axialer Länge aufnehmbar sind. Die axiale Länge der Papierrollen kann z. B. zwischen 500 mm und 2.500 mm betragen. Das Gewicht einer Papierrolle kann mehrere 1.000 kg betragen.

Es kann vorgesehen sein, dass der Rollenwechsler einen Rollenwechsel an der Druckmaschine bei deren vollen Produktionsgeschwindigkeit ausführt. Dazu wird ein Bahnanfang einer neuen Papierrolle zumeist mittels einer Klebeverbindung z. B. an das Bahnende einer in ihrer verwertbaren Bahnlänge aufgebrauchten Papierrolle angefügt. Die Klebeverbindung wird in einer Klebestation an jeder neu in eine laufende Produktion einzuführenden Papierrolle i. d. R. nach deren Auspacken in der Auspackstation dadurch vorbereitet, dass am Umfang der neu in die Produktion einzuführenden Papierrolle eine Klebefläche ausgebildet wird., z. B. durch ein Anbringen von mindestens einem Klebeetikett am Bahnanfang dieser neuen Papierrolle, wobei das Klebeetikett z. B. ein doppelseitiges Klebeband ist.

Ein die Papierrolle zumindest auf ihrem Weg von ihrem Herstellort zu einer das Papier verbrauchenden, vorzugsweise verdruckenden Druckmaschine begleitender RFID-Tag ist an der Papierrolle angebracht, und zwar vorzugsweise in oder an einem Wickelkern der Papierrolle, auf dem das bahnförmig ausgebildete Papier aufgewickelt ist, wobei sich der Wickelkern in Axialrichtung der Papierrolle vorzugsweise vollständig durch die Papierrolle hindurch erstreckt, sodass der Wickelkern vorzugsweise eine zumindest der Papierbahnbreite entsprechende Länge aufweist. Der Wickelkern der Papierrolle hat einen Außendurchmesser z. B. von weniger als 100 mm, vorzugsweise von weniger als 80 mm. Je nach erforderlicher Steifigkeit und/oder Tragfähigkeit kann der Wickelkern der Papierrolle, der vorzugsweise hülsenförmig oder rohrförmig ausgebildet ist, z. B. aus Pappe, Hartfaser, Kunststoff oder Aluminium gefertigt sein. Es kann vorgesehen sein, dass der jeweilige Wickelkern von verbrauchten Papierrollen gesammelt und z. B. an die Papierfabrik zurückgegeben wird, damit die Wickelkerne erneut mit einer Papierbahn umwickelt und zur Herstellung neuer Papierrollen verwendet werden.

Ein RFID-Tag besteht im Wesentlichen aus einem Mikrochip mit einem digitalen Speicher und mit zumeist einem analogen Schaltkreis zum Empfangen und Senden von Daten, einer an den Mikrochip angeschlossenen Antenne, z. B. einer Dipolantenne, und einem Träger oder einem Gehäuse für den Mikrochip und die Antenne, wobei die Antenne z. B. drucktechnisch auf dem Träger hergestellt sein kann. Sogenannte aktive RFID-Tags weisen für ihren Mikrochip eine eigene Energieversorgung auf, z. B. in Form einer Batterie, insbesondere einer langlebigen, die Energieversorgung des Mikrochips vorzugsweise für mehrere Jahre sicherstellenden Batterie.

RFID-Tags kommunizieren drahtlos z. B. durch den Einsatz elektromagnetischer Wellen mit einer Schreib-/Lesestation, wenn sie in den Detektionsbereich der Schreib-/Lesestation gebracht werden. Von RFID-Tags genutzte Frequenzbänder liegen aufgrund gesetzlicher Vorschriften in einem für Hochfrequenz-Sendegeräte behördlich freigegebenen Frequenzbereich. Dabei benutzen RFID-Tags eine Sende- und/oder Empfangsfrequenz von z. B. 125 kHz, 13,56 MHz, 433 MHz, 868 MHz, 915 MHz, 2,45 GHz oder 5,6 GHz. Zur Verwendung in einer mit einem Bedruckstoff verbundenen Handhabungskette ist es vorteilhaft, RFID-Tags auszuwählen, die den Bereich elektromagnetischer Mikrowellen, mit einer eher kurzen Wellenlänge nutzen, z. B. mit einer Wellenlänge zwischen 1 mm und 1 m, was einem Frequenzbereich von 300 MHz bis 300 GHz entspricht. Der Detektionsbereich derartiger RFID-Tags erstreckt sich in Verbindung mit ihren zugehörigen Schreib-/Lesestationen über z. B. mehrere Meter, z. B. bis zu 3 m oder auch 7 m. In Verbindung mit aktiven Mikrochips kann der Detektionsbereich auch 30 m oder mehr betragen, wodurch eine hohe Flexibilität in der Anordnung von RFID-Tag und zugehöriger Schreib-/Lesestation erreichbar ist. RFID-Tags, die zur Datenübertragung eine elektromagnetische Mikrowelle verwenden, bauen zudem klein und sind kostengünstig herstellbar. Auch haben sie den Vorteil, dass aufgrund der kurzen Wellenlänge die Antennen von RFID-Tag und zugehöriger Schreib-/Lesestation nicht exakt zueinander ausgerichtet werden müssen.

Der digitale Speicher des Mikrochips eines RFID-Tags ist z. B. zumindest teilweise wiederbeschreibbar, z. B. bis zu einhunderttausendmal oder häufiger. Die Speicherkapazität kann z. B. 2048 bit oder mehr betragen. Die vorzugsweise ein standardisiertes Protokoll verwendende Datenübertragung zwischen einem RFID-Tag und einer Schreib-/Lesestation kann z. B. eine Baudrate von 640 kbit/s oder mehr aufweisen. RFID-Tags können einen Algorithmus aufweisen, um zumindest einen Teil der Daten verschlüsselt zu senden und/oder zu empfangen, damit Daten des RFID-Tags nur nach einer Autorisierung ausgelesen oder eingeschrieben werden können. Es ist vorteilhaft vorzusehen, dass Daten des RFID-Tags nur dann ausgesendet werden, nachdem dieser RFID-Tag in seiner Kommunikation mit einer Schreib-/Lesestation eindeutig identifiziert worden ist. Dazu ist jeder einzelne, in einem größeren Verbund von RFID-Tags eingesetzte RFID-Tag eindeutig adressierbar. In der Kommunikation zwischen mehreren RFID-Tags und einer Schreib-/Lesestation kann auch eine Routine vorgesehen sein, nach der die betreffenden RFID-Tags von der Schreib-/Lesestation zyklisch, d. h. in einem umlaufenden Verfahren gezielt angesprochen werden.

Bereits in der Papierfabrik ist zumindest eine Schreibstation vorgesehen, mit deren Hilfe Daten in den Speicher des RFID-Tags einer fertig hergestellten Papierrolle eingeschrieben werden, wobei der RFID-Tag vorzugsweise im oder am Wickelkern der Papierrolle angebracht ist. Die Daten können z. B. Angaben zum Hersteller der Papierrolle, d. h. Name und/oder Standort der Papierfabrik, enthalten sowie zu der zur Herstellung der Papierrolle verwendeten Papiermaschine, zur Produktionsserie, zur Rollennummer, zum Produktionsdatum, zur Tambourposition, zur Art der Verpackung der Papierrolle, z. B. ob sich Doppelrollen in einer Verpackung befinden, zum Brutto- und/oder Nettogewicht der Papierrolle, zur Papierfarbe, zur Papierlänge, zur Grammatur, zur Rollenbreite, zum Versand und/oder zum Kunden. Einige dieser Daten, insbesondere die transportrelevanten Daten wie das Bruttogewicht der Papierrolle und/oder die Lieferanschrift, können z. B. am Transportmittel vom Transportunternehmen, d. h. vom Spediteur, ausgelesen und zur Optimierung des Transportprozesses verwendet werden.

Nach oder bei Ankunft der Papierrolle im Wareneingang des Kunden, d. h. der Druckerei, können die zuvor vom Lieferanten, d. h. von der Papierfabrik, im Speicher des RFID-Tags gespeicherten Daten an einer Lesestation ausgelesen werden. In einem Abgleich dieser ausgelesenen Daten mit einem zuvor von der Druckerei ausgelösten Bestellvorgang kann die von der Papierfabrik erfolgte Lieferung auf Richtigkeit geprüft werden, z. B. kann geprüft werden, ob der richtige Typ von Papierrolle z. B. mit der richtigen Papiersorte und/oder der richtigen Grammatur und/oder den richtigen Geometriedaten der Papierrolle geliefert wurde. Auch kann z. B. an einer Wiegestation im Wareneingang das Bruttogewicht der Papierrolle ermittelt. Durch eine berührungslose elektronische Datenerfassung mittels der in der Handhabungskette vorzugsweise ersten Lesestation der' Druckerei kann demnach der die jeweilige Papierrolle im Speicher des RFID-Tags begleitende Datensatz in einem automatisierten Betriebsvorgang zur Verifizierung der vom Lieferanten gemachten Angaben benutzt werden. Wenn sich im Vergleich der in der Druckerei ermittelten Daten zu den Angaben des Lieferanten eine relevante, d. h. eine zuvor festgelegte Toleranzgrenze überschreitende Abweichung ergibt, kann der aktuell ermittelte Wert z. B. der Grammatur, der Geometriedaten oder des Bruttogewichts im Datensatz des RFID-Tags mithilfe einer Schreibstation gespeichert werden. Wenn die gelieferte Papierrolle in der Druckerei einer bestimmten Druckmaschine oder einem bestimmten Druckauftrag zugeordnet werden soll, können Angaben zu diesen Sachverhalten sowie Angaben zum beabsichtigten Lagerort im Lager der Druckerei an der Schreibstation als Daten in den Speicher des RFID-Tags eingeschrieben werden.

Innerhalb der Druckerei eingesetzte Fördereinrichtungen, z. B. Wagen eines fahrerlosen Transportsystems, Regalfahrzeug, Rollwagen oder ähnliches, lesen z. B. die Daten zum beabsichtigten Lagerort im Lager der Druckerei aus oder nutzen zumindest diese Daten und lagern die Papierrolle an dem vorgesehenen Lagerort ein. Es kann vorgesehen sein, dass der Zeitpunkt der Einlagerung im Datensatz des RFID-Tags gespeichert wird, um einem zumindest das Lager verwaltenden Logistiksystem z. B. bei einem Vorhandensein von mehreren Papierrollen gleichen Typs die Entscheidung zu ermöglichen, diejenige Papierrolle mit dem ältesten Zeitrang dem Druckprozess vorrangig zuzuführen. Ebenso können der Lagerort der Papierrolle sowie weitere Angaben zu ihren Eigenschaften in dem Logistiksystem registriert werden. Das Logistiksystem kann z. B. Bestandteil eines Datennetzwerkes sein, welches u. a. auch Daten des im Speicher des RFID-Tags gespeicherten Datensatzes zumindest zwischen der den Bedruckstoff versendenden Papierfabrik und der den Bedruckstoff empfangenden Druckerei austauscht. Das Datennetzwerk kann insbesondere innerhalb der Druckerei alle miteinander zusammenwirkenden Funktionseinheiten bzw. Abteilungen miteinander vernetzen und auch Daten von in der Druckerei eingesetzten Druckmaschinen aufnehmen und z. B. zur Lösung von Steuerungsaufgaben verwenden, wobei eine Druckmaschine betreffende Daten z. B. von einem zu der Druckmaschine gehörenden Leitstand in das Datennetzwerk eingespeist werden. Umgekehrt können aufgrund der zumindest betriebsinternen datentechnischen Vernetzung z. B. die Logistik der Papierrollen betreffende Daten am Leitstand einer Druckmaschine aufgerufen und angezeigt werden.

Wenn ein Druckauftrag zur Ausführung an der Druckmaschine oder an einer der Druckmaschinen disponiert wird, geht damit die Entscheidung einher, welcher Typ von Papierrolle in welcher Menge z. B. durch Umlagerung aus dem Hauptlager in das dieser Druckmaschine zugeordnete Pufferlager aufzunehmen ist, wobei z. B. das zumindest das Lager verwaltende Logistiksystem veranlasst, dass in dem Pufferlager die benötigte Menge an Papierrollen vorgehalten werden. Vorzugsweise auf ihrem Weg zum Pufferlager werden die Papierrollen ausgepackt und/oder gewogen und z. B. für einen unterbrechungsfreien Papierrollenwechsel vorbereitet. An der Auspackstation der Druckerei wird die Verpackung von den Papierrollen manuell oder vorzugsweise automatisch entfernt, wobei eine automatische Auspackstation Daten zur Geometrie der Papierrollen aus deren jeweiligen RFID-Tag auslesen kann, um anhand dieser Daten Mittel zum Entfernen der Verpackung, z. B. eine Schneideinrichtung, entsprechend einzustellen und/oder zu führen. Nach dem Entfernen einer die Papierrolle umfassenden Umfangsverpackung kann die Papierrolle erneut gewogen werden, wonach dieses ein erstes Nettogewicht darstellende Rollengewicht im Datensatz des RFID-Tags gespeichert wird. Nach einem Abschälen von äußeren, z. B. durch den Transport beschädigten Papierlagen von der Papierrolle ergibt sich ein ein zweites Nettogewicht darstellendes Rollengewicht, welches ebenfalls, vorzugsweise zusätzlich zum ersten Nettogewicht im Datensatz des RFID-Tags gespeichert wird. Auch kann der aktuelle, durch eine Messeinrichtung vorzugsweise automatisch ermittelte Durchmesser der für den Produktionseinsatz vorbereiteten Papierrolle in dem Datensatz gespeichert werden.

Darüber hinaus kann es vorteilhaft sein, weitere insbesondere für den Weiterverarbeitungsprozess der Papierrolle, d. h. für den Druckprozess relevante Daten zu erfassen und dem Datensatz des RFID-Tags hinzuzufügen, z. B. Daten zu einer möglichen Unrundheit der Papierrolle, zu einer eventuellen Delle und/oder Abplattung der Papierrolle und/oder zu einer zu einer der Stirnseiten der Papierrolle geneigten Abschrägung der Papierrolle, zu einer konkaven oder konvexen oder kegelförmigen Verformung der Papierrolle als Abweichung von ihrer idealen Zylinderform, zu einer Exzentrizität des Wickelkerns, zu einer Unebenheit der Stirnflächen der Papierrolle z. B. durch eine Verschiebung des Wickelkerns gegenüber den äußeren, mantelflächennahen Lagen der Papierrolle oder ähnliche Parameter, die jeweils Einfluss auf die Weiterverarbeitbarkeit der Papierrolle, insbesondere in ihrem Abwickelprozess, nehmen. Wenn z. B. anhand dieser erfassten Daten festgestellt wird, dass im Abgleich mit einer entsprechenden Sollvorgabe eine zuvor festgelegte Toleranzgrenze überschritten wird, kann die jeweils betroffene Papierrolle z. B. von ihrer weiteren Verarbeitung in der Druckerei ausgeschlossen werden, indem der Datensatz des RFID-Tags z. B. einen Sperrvermerk erhält, sofern der ermittelte Fehler der Papierrolle vor Ort nicht behebbar ist, wodurch eine sonst mögliche Störung in ihrem Weiterverarbeitungsprozess vermieden wird. Somit ist anhand von Daten aus dem Datensatz des RFID-Tags feststellbar, ob eine Papierrolle zur Weiterverarbeitung in der Druckmaschine zugelassen werden kann. Wenn die Kriterien für eine Zulassung der Papierrolle zum Produktionsprozess nicht erfüllt sind, kann die betreffende Papierrolle z. B. davon ausgeschlossen werden, von einem Rollenwechsler aufgenommen oder an dem Rollenwechsler auf eine hohe Rotationsgeschwindigkeit beschleunigt zu werden.

Wie bereits erwähnt, wird zur Vorbereitung auf einen unterbrechungsfreien Papierrollenwechsel in einer Klebestation am Bahnanfang der neu in die laufende Produktion einzuführenden Papierrolle mindestens eine Klebefläche ausgebildet, indem z. B. mindestens ein Klebeetikett,angebracht wird, wobei dieses Klebeetikett z. B. aus einem beidseitig klebenden Klebeband bestehen kann. Die Klebewirkung der Klebefläche, d. h. des Klebeetikettes, hält zumeist nur für eine beschränkte Zeit vor, z. B. für einige Stunden, z. B. für 8 bis 72 Stunden, vorzugsweise bis zu 24 Stunden, wobei die Dauer der Klebewirkung z. B. von dem verwendeten Klebstoff und/oder von den klimatischen Umgebungsbedingungen für die Klebefläche abhängig ist, wobei günstige klimatische Umgebungsbedingungen z. B. bei einer Umgebungstemperatur zwischen 21 °C und 28°C sowie bei einer Luftfeuchtigkeit im Bereich zwischen 50% und 65% relativer Feuchte bestehen. Nach einem Verstreichen dieser Zeitspanne muss die Klebefläche, d. h. das Klebeetikett erneuert werden, um eine ausreichende Klebewirkung für den unterbrechungsfreien Papierrollenwechsel sicherzustellen, sofern die neue Papierrolle bis dahin noch nicht in die Druckproduktion eingebracht worden ist, sondern sich noch in einer Zwischenlagerung befindet. Auch die Durchführung des Anbringens des Klebeetikettes als solche, d. h. ob diese produktionsvorbereitende Klebung durchgeführt worden ist oder noch nicht, und/oder der Zeitpunkt für dieses Anbringen kann im Datensatz des RFID-Tags dokumentiert werden. Letztere Angabe ermöglicht einen Rückschluss auf die voraussichtliche Haltbarkeit der vorbereiteten Klebeverbindung bzw. darauf, wann diese Klebeverbindung erneuert und die Papierrolle z. B. aus dem Pufferlager zur Klebestation transportiert werden muss, falls die derart vorbereitete neue Papierrolle bis zu einem bestimmten Zeitpunkt noch nicht in den Produktionsprozess eingebracht worden ist. Zusätzlich oder alternativ kann auch jeweils als Information die Dauer für die voraussichtliche Haltbarkeit der vorbereiteten Klebeverbindung und/oder ein z. B. ermitteltes Verfallsdatum für die Wirksamkeit dieser vorbereiteten Klebeverbindung in den Datensatz eingetragen werden. Weitere in den Datensatz einzuschreibende Daten hinsichtlich der produktionsvorbereitenden Ausbildung einer Klebefläche an dem der Druckmaschine zuzuführenden Bedruckstoff können z. B. zumindest eine Abmessung, vorzugsweise die Abmessungen der Klebefläche, d. h. z. B. deren Kantenlänge, und/oder die Position der Klebefläche auf dem Bedruckstoff und/oder die Sorte des verwendeten Klebeetiketts betreffen, wobei die Sorte des Klebeetiketts z. B. angibt, von welchem Hersteller das Klebeetikett stammt und/oder welche Produktbezeichnung dieses Klebeetikett trägt, denn je nach Sorte des Klebeetiketts können sich diese in ihrem Klebstoff und damit auch in der Wirksamkeit und/oder Haltbarkeit der vorbereiteten Klebeverbindung unterscheiden, sodass mit unterschiedlichen Klebeetiketten versehene Bedruckstoffe hinsichtlich ihrer Bereitstellung an der Druckmaschine unterschiedlich zu behandeln sind.

Nach dem Auspacken der Papierrolle und dem Anbringen des Klebeetikettes ist die Papierrolle bereit, in den Produktionsprozess eingeführt zu werden. Bis kurz vor ihrer tatsächlichen Verwendung in der Druckmaschine wird sie im Pufferlager zwischengelagert. Zur Einführung in den Produktionsprozess wird die Papierrolle aus dem Pufferlager vorzugsweise mit einem automatischen Fördermittel an den Rollenwechsler herangeführt und dort von einem Tragarmenpaar des Rollenwechslers aufgenommen. Das Tragarmenpaar des Rollenwechslers wird in seiner Positionierung, z. B. hinsichtlich seiner Stellung und/oder hinsichtlich des Abstands zwischen den Tragarmen anhand von Daten, insbesondere von aktuell geltenden geometrischen Daten im Datensatz des RFID-Tags eingestellt. Auch kann dem Datensatz des RFID-Tags entnehmbar sein, ob zum Aufachsen dieser Papierrolle ein Rollenadapter erforderlich ist. Darüber hinaus ist es vorteilhaft, den Datensatz des RFID-Tags einer nur teilweise verbrauchten Papierrolle mit Daten zur Seitenregisterpositionierung und/oder Bahnregelung zu versehen, weil bei einer erneuten Aufnahme dieser Papierrolle in den Produktionsprozess das Tragarmenpaar des Rollenwechslers durch Auslesen dieser Daten auch axial richtig positioniert werden kann. Ebenso kann das Tragarmenpaar des Rollenwechslers in seiner axialen Positionierung während des Produktionsprozesses anhand von im Datensatz des RFID-Tags enthaltenen Daten zu einer eventuellen Unebenheit der Stirnflächen der Papierrolle z. B. durch eine Verschiebung des Wickelkerns gegenüber den äußeren, mantelflächennahen Lagen der Papierrolle nachgeführt werden. Insgesamt lassen sich durch die im Datensatz des RFID-Tags gespeicherten und einem Steuerungssystem des Rollenwechslers zugeführten Daten Rüstvorgänge und/oder Rüstzeiten des Rollenwechslers optimieren.

Zur Einstellung des Tragarmenpaares des Rollenwechslers können außer den dem Datensatz des RFID-Tags entnehmbaren Daten weitere Daten erforderlich sein, welche z. B. von mindestens einem Sensor und/oder mindestens einem Stellungsgeber des den Rollenwechsler steuernden Steuerungssystems bereitgestellt werden, sodass die Einstellung des Tragarmenpaares des Rollenwechslers infolge einer Verknüpfung der dem Datensatz des RFID-Tags entnehmbaren Daten und der Daten des mit dem Rollenwechsler in Verbindung stehenden Steuerungssystems erfolgt.

Am Rollenwechsler sind daher keine die Papierrolle vermessenden Messeinrichtungen, sondern lediglich eine Lesestation zum Lesen von Daten des Datensatzes des RFID-Tags erforderlich. Gegebenenfalls ist jedoch mindestens ein Sensor und/oder mindestens ein Stellungsgeber nötig, der jeweils Auskunft über eine Position der aufzuachsenden neuen Papierrolle relativ zu dem Tragarmenpaar des Rollenwechslers gibt, damit von der dem Rollenwechsler zugeordneten Lesestation gelesene Daten des Datensatzes eines RFID-Tags durch eine Verknüpfung mit Daten aus mindestens einem anderen Betriebsvorgang eindeutig mit einer bestimmten aufzuachsenden Papierrolle in Verbindung gebracht werden können und eine Verwechslung mit einer anderen in der Nähe des Rollenwechslers befindlichen Papierrolle zuverlässig ausgeschlossen wird. Die vorgenannte Datenverknüpfung kann somit zumindest aus einer von dem Steuerungssystem des Rollenwechslers durchgeführten Plausibilitätsprüfung hinsichtlich der dem Datensatz eines RFID-Tags entnommenen Daten bestehen.

Am Rollenwechsler ist vorteilhafterweise auch eine Schreibstation vorgesehen, um im Datensatz des RFID-Tags einer in den Produktionsprozess eingebrachten Papierrolle Daten darüber einzuschreiben, in welchem Maße diese Papierrolle insbesondere durch die Ausführung des Druckprozesses bereits verbraucht worden ist. Diese den Verbrauch der Papierrolle kennzeichnenden Daten können z. B. aus der Anzahl der Umdrehungen der zwischen den Tragarmen des Rollenwechslers gehaltenen Papierrolle ermittelt werden, denn aus der Anzahl der Umdrehungen der Papierrolle lässt-sich deren abgewickelte Bahnlänge errechnen, und daraus wiederum lässt sich bei bekannter ursprünglicher Papierbahnlänge eine Restbahnlänge und/oder bei bekanntem ursprünglichen Durchmesser der aktuelle Durchmesser der Papierrolle berechnen.

Eine zur Ausführung des aktuellen Druckauftrages nur teilweise verbrauchte Papierrolle wird vom Rollenwechsler abgenommen und z. B. in das Pufferlager zurückgestellt. Das Einschreiben von Daten, die eine nur teilweise verbrauchte Papierrolle kennzeichnen, in den Speicher des RFID-Tags kann z. B. beim Abachsvorgang dieser Papierrolle vom Rollenwechsler erfolgen. Der Datensatz kann auch dahingehend ergänzt werden, bei welchem Druckauftrag und/oder zu welchem Zeitpunkt die Restmenge von Papier auf dieser Papierrolle verblieben ist. Davon kann abhängig sein, an welchem Lagerort die nur teilweise verbrauchte Papierrolle einzulagern ist.

Um die Qualität des Bedruckstoffes und/oder der daraus produzierten Druckerzeugnisse zu verbessern, d. h. um eine das Qualitätsmanagement unterstützende Produktionsauswertung vorzunehmen, ist es vorteilhaft, den Datensatz einer nur teilweise verbrauchten Papierrolle mit Daten darüber zu versehen, ob es während der Ausführung des Druckauftrages, der diese Papierrolle verwendet hat, einen Bahnriss und/oder eine andere Beschädigung an der Papierrolle gegeben hat und in welchem Zustand sich die Papierrolle z. B. am Ende des mit dieser Papierrolle ausgeführten Druckauftrages befindet, d. h. ob der Rest der Materialbahn dieser Papierrolle in einem weiteren Druckprozess verwertbar ist oder davon ausgeschlossen werden muss, um keine weitere Produktionsstörung zu riskieren. Diesen Statusangaben können wiederum Angaben zu deren Ereigniszeitpunkt und/oder dazu, nach welcher Abwicklung sich das Ereignis zutrug, hinzugefügt werden. Diese Angaben können einzeln oder in ihrer Zusammenschau für die Druckerei und/oder nach Rücksendung zumindest des den RFID-Tag tragenden Wickelkerns der Papierrolle an die Papierfabrik für dieselbe sehr aufschlussreich sein, wenn es darum geht, die Qualität der Papierrolle und/oder der daraus produzierten Druckerzeugnisse zu verbessern. Mit den im Speicher des RFID-Tags fortgeschriebenen Daten lassen sich demnach bezüglich der Papierrollen z. B. ein Reklamationsvorgang und/oder ein Rücklieferungsvorgang steuern.

Der im Speicher des RFID-Tags gespeicherte Datensatz bildet somit ein Begleitdokument für die Papierrolle, an der der RFID-Tag angebracht ist. Die im Datensatz enthaltenen Daten können in einer oder mehreren Dateien gespeichert sein. Für das Einschreiben und/oder Auslesen zumindest eines Teils der im Speicher des RFID-Tags gespeicherten Daten können vorteilhafterweise Zugriffsrechte bzw. Berechtigungen festgelegt sein, sodass Transaktionen von Daten und/oder deren Veränderung nur von dazu Berechtigten ausgeführt werden können. Eine Aktualisierung des Datensatzes erfolgt dann nur nach einer Legitimierung und/oder Authentifizierung eines den Datensatz verändernden Datensenders.

Das Begleitdokument enthält weit mehr Daten, als zur Identifizierung und/oder Verwaltung der den RFID-Tag tragenden Handelseinheit erforderlich ist, da in dem das Begleitdokument bildenden Datensatz vorzugsweise alle wesentlichen Veränderungen an dieser Handelseinheit und/oder alle wichtigen Einwirkungen auf den in dieser Handelseinheit beförderten Bedruckstoff registriert und protokolliert werden. Die in dem Protokoll erfassten Daten können ihrerseits für Steuerungs- und Regelungsaufgaben innerhalb der mit dieser Handelseinheit oder mit dem Bedruckstoff verbundenen Handhabungskette verwendet werden, z. B. zur Steuerung einer Transporteinrichtung und/oder eines Rollenwechslers.

Die einzige Figur veranschaulicht anhand eines Blockdiagramms nochmals beispielhaft die Handhabungskette für eine einen Bedruckstoff bereitstellende Handelseinheit. Z. B. eine in der Papierfabrik 01 hergestellte Papierrolle wird mit einem Transportsystem 02 zu einer Druckerei 03 transportiert und dort im Wareneingang 04 angeliefert. Vom Wareneingang 04 kann die Papierrolle direkt in einem z. B. von einem Logistiksystem 09 verwalteten Lager 06 der Druckerei 03 eingelagert werden, z. B. in einem Hauptlager 07 oder einem Pufferlager 08. Produktionsgerecht wird die zur Ausführung eines Druckauftrages erforderliche Papierrolle vom Hauptlager 07 in ein Pufferlager 08 überführt. Eine von der Papierfabrik 01 angelieferte Papierrolle kann auch direkt vom Wareneingang 04, aus dem Hauptlager 07 oder aus dem Pufferlager 08 einer Vorbereitungsstation 13, insbesondere einer Auspackstation 13 zugeführt werden, um z. B. eine den Bedruckstoff der Papierrolle schützende Umfangsverpackung zu entfernen. Anschließend kann die ausgepackte Papierrolle zur Feststellung von deren Nettogewicht an einer Wiegestation 14 gewogen werden. Danach kann die Papierrolle in einer vorzugsweise noch zur Vorbereitungsstation 13 gehörenden Klebestation 16 auf einen z. B. bei laufender Produktion der Druckmaschine 12 auszuführenden Rollenwechsel vorbereitet werden. Die so vorbereitete Papierrolle wird entweder direkt oder nach einer Zwischenlagerung im Pufferlager 08 einem der Druckmaschine 12 zugeordneten Rollenwechsler 11 zugeführt. Am Rollenwechsler 11 wird die Papierrolle der z. B. laufenden Produktion zugeführt. Des Weiteren kann die vorbereitete Papierrolle von der Auspackstation 13 direkt in die Klebestation 16 gebracht oder aber von der Auspackstation 13 oder der Klebestation 16 wieder im Pufferlager 13 eingelagert werden. Auch ist es möglich, eine vorbereitete Papierrolle jeweils von der Auspackstation 13 oder der Klebestation 16 direkt dem Rollenwechsler 11 zuzuführen. Eine nur teilweise verbrauchte Papierrolle kann nach Beendigung des Druckauftrages vom Rollenwechsler 11 abgenommen und wieder im Lager 06, d. h. im Hauptlager 07 oder im Pufferlager 08, eingelagert werden. Der Wickelkern einer z. B. verbrauchten Papierrolle kann der Papierfabrik 01, z. B. über das Transportsystem 02 zur Wiederverwendung zugeleitet werden. Der Druckmaschine 12 ist vorzugsweise ein Leitstand 18 zugeordnet, wobei der Leitstand 18 z. B. mindestens eine Anzeigeeinrichtung und mindestens ein Bedienelement aufweist, wobei am Leitstand 18 insbesondere mit oder in der Druckmaschine 12 auszuführende Steuerungs- oder Regelungsprozesse einstellbar sind. Der Leitstand 18 ist datentechnisch z. B. mit dem das Lager 06 der Druckerei 03 verwaltenden Logistiksystem 09 verbunden, z. B. durch ein gemeinsam benutzendes Datennetzwerk, damit zwischen dem Leitstand 18 und dem Logistiksystem 09 Daten austauschbar und zur Wahrnehmung durch einen Bediener der Druckmaschine 12 z. B. an der Anzeigeeinrichtung des Leitstandes 18 anzeigbar sind.

Es ist vorgesehen, dass mehrere, vorzugsweise alle in dieser Handhabungskette eine Veränderung an der Handelseinheit und/oder an dem Bedruckstoff vornehmenden Funktionseinheiten, wie z. B. die Papierfabrik 01, das Transportsystem 02, der Wareneingang 04 der Druckerei 03, das Hauptlager 07 oder Pufferlager 08, der Rollenwechsler 11, die Auspackstation 13, die Wiegestation 14 oder die Klebestation 16 jeweils zumindest eine Lesestation 17, vorzugsweise eine kombinierte Schreib-/Lesestation 17 aufweisen, um mit dem Speicher des RFID-Tags einen Datenaustausch vorzunehmen, d. h. dass dort gespeicherte Daten zumindest ausgelesen werden können. Vorzugsweise wird in dem in dem Speicher des RFID-Tags gespeicherten Datensatz an den jeweiligen Schreib-/Lesestationen 17 ein Protokoll fortgeschrieben, indem z. B. alle in dieser Handhabungskette wichtigen, mit der Handelseinheit und/oder dem Bedruckstoff in Verbindung stehenden Ereignisse registriert werden. Damit erhält der Speicher des RFID-Tags hinsichtlich der Handelseinheit und/oder des mit der Handelseinheit bereitgestellten Bedruckstoffes die Funktion eines elektronisch geführten Logbuchs oder Begleitdokuments. Darüber hinaus können im Datensatz enthaltene Daten insbesondere innerhalb der beschriebenen Handhabungskette für Steuerungs- und Regelungsaufgaben verwendet werden. So können Daten zur Steuerung oder Regelung der Druckmaschine ₁2 an mindestens eine der in der Druckerei 03 angeordneten Schreib- und/oder Lesestationen 17 zur Speicherung in dem Speicher des RFID-Tags übergeben werden, wobei diese Datenübergabe vorzugsweise über den Leitstand 18 der Druckmaschine 12 erfolgt.

### Bezugszeichenliste

- 01: Papierfabrik
- 02: Transportsystem
- 03: Druckerei
- 04: Wareneingang
- 05: -
- 06: Lager
- 07: Hauptlager
- 08: Pufferlager
- 09: Logistiksystem
- 10: -
- 11: Rollenwechsler
- 12: Druckmaschine
- 13: Vorbereitungsstation, Auspackstation
- 14: Wiegestation
- 15: -
- 16: Klebestation
- 17: Schreib-/Lesestation
- 18: Leitstand

## Patentansprüche

1. Verfahren zur Erstellung und Verwendung eines einen in einer Druckmaschine (12) zu verarbeitenden Bedruckstoff begleitenden Begleitdokuments, wobei das Begleitdokument in Form eines elektronischen in einem Speicher eines RFID-Tags gespeicherten Datensatzes gebildet wird, wobei der RFID-Tag an einer den Bedruckstoff bereitstellenden Handelseinheit angebracht wird, wobei als Handelseinheit eine Papierrolle verwendet wird, wobei der Datensatz den Bedruckstoff zumindest auf dessen Weg vom Ort seines Herstellers und/oder Lieferanten zu der diesen Bedruckstoff verarbeitenden Druckmaschine (12) begleitet, wobei in diesen Datensatz zumindest Daten zum Hersteller des Bedruckstoffes und/oder zu dessen Lieferanten sowie Daten zur Herstellung des Bedruckstoffes eingeschrieben werden, **dadurch gekennzeichnet, dass** der Datensatz im Fall einer Handelseinheit mit in einer Produktion der Druckmaschine (12) nur teilweise verbrauchtem Bedruckstoff zumindest mit ein Ereignis kennzeichnenden Daten ergänzt wird, wobei das Ereignis einen Riss des Bedruckstoffes und/oder eine Beschädigung der Handelseinheit betrifft und während der mit dem Bedruckstoff dieser Handelseinheit von der Druckmaschine (12) ausgeführten Produktion aufgetreten ist, wobei in den Datensatz auf eine Weiterverarbeitbarkeit des Bedruckstoffes Einfluss nehmende Daten eingeschrieben werden, wobei nach einem Auslesen dieser Daten im Abgleich mit einer entsprechenden Sollvorgabe über eine Zulassung dieses Bedruckstoffes zu der beabsichtigten Weiterverarbeitung entschieden wird, wobei die betreffende Papierrolle davon ausgeschlossen wird, von einem Rollenwechsler aufgenommen oder an dem Rollenwechsler auf eine hohe Rotationsgeschwindigkeit beschleunigt zu werden, wenn die Kriterien für die Zulassung der Papierrolle zum Produktionsprozess nicht erfüllt sind.

2. Verfahren nach Anspruch 1, **dadurch gekennzeichnet, dass** der fortgeschriebene Datensatz von einer die Druckmaschine (12) betreibenden Druckerei (03) und/oder nach Rücksendung des RFID-Tags an den Hersteller des mit der Handelseinheit bereitgestellten Bedruckstoffes für einen Reklamationsvorgang und/oder einen Rücklieferungsvorgang ausgewertet wird.

3. Verfahren nach Anspruch 1, **dadurch gekennzeichnet, dass** der Datensatz zumindest nach einer an der Handelseinheit ausgeführten Veränderung und/oder nach einer Veränderung der Menge und/oder Beschaffenheit des in dieser Handelseinheit bereitgestellten Bedruckstoffes aktualisiert wird.

4. Verfahren nach Anspruch 1, **dadurch gekennzeichnet, dass** eine Aktualisierung des Datensatzes nur nach einer Legitimierung und/oder Authentifizierung eines den Datensatz verändernden Datensenders ausgeführt wird.

5. Verfahren nach Anspruch 1, **dadurch gekennzeichnet, dass** zumindest für einen Teil der im Speicher des RFID-Tags gespeicherten Daten für deren Einschreiben und/oder Auslesen Zugriffsrechte und/oder Berechtigungen festgelegt werden.

6. Verfahren nach Anspruch 1, **dadurch gekennzeichnet, dass** zumindest ein Teil der Daten mit einer Schreib- und/oder Lesestation (17) verschlüsselt ausgetauscht wird.

7. Verfahren nach Anspruch 1, **dadurch gekennzeichnet, dass** in dem Datensatz die Daten hinsichtlich ihrer Syntax und Semantik gemäß einem im Logistikwesen verwendeten Standard gespeichert werden.

8. Verfahren nach Anspruch 1, **dadurch gekennzeichnet, dass** der RFID-Tag zum Datenaustausch mit der Schreib- und/oder Lesestation (17) ein standardisiertes Protokoll verwendet.

9. Verfahren nach Anspruch 1, **dadurch gekennzeichnet, dass** die Handelseinheit von einer Papierfabrik (01) versendet wird.

10. Verfahren nach Anspruch 1, **dadurch gekennzeichnet, dass** Daten des Datensatzes mit einem zumindest ein Lager (06) der Druckerei (03) verwaltenden Logistiksystem (09) ausgetauscht werden.

11. Verfahren nach Anspruch 10, **dadurch gekennzeichnet, dass** mit dem Logistiksystem (09) ausgetauschte Daten des Datensatzes an einen zur Druckmaschine (12) gehörenden Leitstand (18) übergeben werden.

12. Verfahren nach Anspruch 1, **dadurch gekennzeichnet, dass** mit einer Steuerung oder Regelung der Druckmaschine (12) in Verbindung stehende Daten an mindestens eine in der Druckerei (03) angeordnete Schreib- und/oder Lesestation (17) zur Speicherung in dem Speicher des RFID-Tags übergeben werden.

13. Verfahren nach Anspruch 12, **dadurch gekennzeichnet, dass** die mit der Steuerung oder Regelung der Druckmaschine (12) in Verbindung stehenden Daten über den Leitstand (18) der Druckmaschine (12) an mindestens eine in der Druckerei (03) angeordnete Schreib- und/oder Lesestation (17) zur Speicherung in dem Speicher des RFID-Tags übergeben werden.

14. Verfahren nach Anspruch 1, **dadurch gekennzeichnet, dass** Daten des Datensatzes in einem zumindest die den Bedruckstoff versendende Papierfabrik (01) und die den Bedruckstoff empfangende Druckerei (03) einbeziehenden Datennetzwerk ausgetauscht werden.

15. Verfahren nach Anspruch 1, **dadurch gekennzeichnet, dass** der Datensatz für Steuerungs- und Regelungsaufgaben innerhalb der mit dieser Handelseinheit oder mit dem Bedruckstoff verbundenen Handhabungskette verwendet wird.

16. Verfahren nach Anspruch 1, **dadurch gekennzeichnet, dass** der Bedruckstoff um einen Wickelkern der Papierrolle gewickelt wird, wobei der RFID-Tag in oder an diesem Wickelkern angebracht wird.

17. Verfahren nach Anspruch 1, **dadurch gekennzeichnet, dass** der RFID-Tag mit einer eigenen Energieversorgung versehen wird.

18. Verfahren nach Anspruch 1, **dadurch gekennzeichnet, dass** zum Datenaustausch zwischen dem RFID-Tag und der Schreib- und/oder Lesestation (17) eine elektromagnetische Mikrowelle mit einer Frequenz von mindestens 300 MHz verwendet wird.

19. Verfahren nach Anspruch 1, **dadurch gekennzeichnet, dass** der RFID-Tag eine Sende- und/oder Empfangsfrequenz in einem bei 433 MHz, 868 MHz, 915 MHz, 2,45 GHz oder 5,6 GHz liegenden Frequenzband verwendet.

20. Verfahren nach Anspruch 1, **dadurch gekennzeichnet, dass** in den Datensatz Daten zu der zur Herstellung der Papierrolle verwendeten Papiermaschine, zur Produktionsserie, zur Rollennummer, zum Produktionsdatum und/oder zur Tambourposition eingeschrieben werden.

21. Verfahren nach Anspruch 1, **dadurch gekennzeichnet, dass** in den Datensatz Daten zur Art der Verpackung und/oder zum Versand und/oder zum Kunden des Bedruckstoffes eingeschrieben werden.

22. Verfahren nach Anspruch 1, **dadurch gekennzeichnet, dass** in den Datensatz Daten zum im Lager (06) der Druckerei (03) vorgesehenen Lagerort des Bedruckstoffes eingeschrieben werden.

23. Verfahren nach Anspruch 1, **dadurch gekennzeichnet, dass** in den Datensatz Daten zum Brutto- und/oder Nettogewicht der Handelseinheit und/oder des Bedruckstoffes eingeschrieben werden.

24. Verfahren nach Anspruch 1, **dadurch gekennzeichnet, dass** in den Datensatz Daten zur Bedruckstofffarbe und/oder zur Bedruckstofflänge und/oder zur Bedruckstoffbreite und/oder zur Grammatur des Bedruckstoffes eingeschrieben werden.

25. Verfahren nach Anspruch 1, **dadurch gekennzeichnet, dass** Daten des Datensatzes zum Einstellen und/oder zum Führen einer den Bedruckstoff auspackenden Auspackstation (13) verwendet werden.

26. Verfahren nach Anspruch 1, **dadurch gekennzeichnet, dass** Daten des Datensatzes zur Einstellung und/oder Nachführung eines Paares von Tragarmen eines zur Druckmaschine (12) gehörenden Rollenwechslers (11) verwendet werden.

27. Verfahren nach Anspruch 26, **dadurch gekennzeichnet, dass** zur Einstellung des Paares von Tragarmen des Rollenwechslers (11) eine Verknüpfung von Daten des Datensatzes des RFID-Tags mit Daten eines den Rollenwechsler (11) steuernden Steuerungssystems verwendet wird, wobei die Daten des den Rollenwechsler (11) steuernden Steuerungssystems von mindestens einem Sensor und/oder mindestens einem Stellungsgeber bereitgestellt werden und Auskunft über eine Position einer aufzuachsenden Papierrolle relativ zu dem Tragarmenpaar des Rollenwechslers (11) geben.

28. Verfahren nach Anspruch 1, **dadurch gekennzeichnet, dass** in den Datensatz Daten eingeschrieben werden, die die Ausbildung einer Klebefläche an einer neu in die Druckproduktion einzubringenden Papierrolle und/oder den Zeitpunkt für die Ausbildung dieser Klebefläche dokumentieren.

29. Verfahren nach Anspruch 1, **dadurch gekennzeichnet, dass** nach oder während einer Verwendung des mit der Handelseinheit bereitgestellten Bedruckstoffes in einer Produktion der Druckmaschine (12) in den Datensatz Daten zum Verbrauch des mit dieser Handelseinheit bereitgestellten Bedruckstoffes eingeschrieben werden.

30. Verfahren nach Anspruch 1, **dadurch gekennzeichnet, dass** nach oder während einer Verwendung des mit der Handelseinheit bereitgestellten Bedruckstoffes in einer Produktion der Druckmaschine (12) in den Datensatz Daten zur Restmenge des mit dieser Handelseinheit bereitgestellten Bedruckstoffes eingeschrieben werden.

31. Verfahren nach Anspruch 1, **dadurch gekennzeichnet, dass** eine nur teilweise verbrauchte Papierrolle vom Rollenwechsler (11) abgenommen und in das Lager (06) zurückgestellt wird.

32. Verfahren nach Anspruch 1, **dadurch gekennzeichnet, dass** der Wickelkern der Papierrolle nach einem zumindest teilweisen Verbrauch des auf dem Wickelkern gewickelten Bedruckstoffes zu einer erneuten Umwicklung mit Bedruckstoff verwendet wird.

33. Verfahren nach Anspruch 1, **dadurch gekennzeichnet, dass** in den Datensatz einer nur teilweise verbrauchten Papierrolle Daten zur Seitenregisterpositionierung und/oder Bahnregelung eingeschrieben werden.

34. Verfahren nach Anspruch 1, **dadurch gekennzeichnet, dass** in dem Datensatz alle Veränderungen an der jeweiligen Handelseinheit und/oder alle Einwirkungen auf den mit dieser Handelseinheit bereitgestellten Bedruckstoff fortlaufend protokolliert werden.

35. Verfahren nach Anspruch 1, **dadurch gekennzeichnet, dass** während der von der Druckmaschine (12) ausgeführten Produktion der Bedruckstoff zumindest in die Druckmaschine (12) eingezogen wird.

36. Verfahren nach Anspruch 1, **dadurch gekennzeichnet, dass** während der von der Druckmaschine (12) ausgeführten Produktion der Bedruckstoff bedruckt wird.

## Claims

1. Method for the creation and use of an accompanying document accompanying a print substrate to be processed in a printing machine (12), the accompanying document being formed in the form of an electronic dataset stored in a memory of an RFID tag, the RFID tag being attached to a trading unit providing the print substrate, a paper roll being used as the trading unit, the dataset accompanying the print substrate at least on its path from the site of its manufacturer and/or supplier to the printing machine (12) processing this print substrate, at least data on the manufacturer of the print substrate and/or on its supplier and data for the production of the print substrate being written into this dataset, **characterized in that** the dataset in the case of a trading unit with print substrate only partially consumed in a production of the printing press (12) is supplemented at least with data characterizing one event, the event relating to a tear in the print substrate and/or damage to the trading unit and the occurring during the production carried out by the printing machine (12) using the print substrate of this trading unit, data influencing further processability of the print substrate being written into the dataset, after reading off this data in comparison with an appropriate target specification it being decided about an authorization of this print substrate for the intended further processing, the paper roll concerned thereof being excluded from acceptance by a roll changer or from being accelerated on the roll changer to a high speed of rotation if the criteria for the authorization of the paper roll for the production process are not fulfilled.

2. Method according to Claim 1, **characterized in that** the updated dataset is evaluated by a printing works (03) operating the printing machine (12) and/or after resending the RFID tag to the manufacturer of the print substrate made available by the trading unit for a complaint process and/or a return delivery process.

3. Method according to Claim 1, **characterized in that** the dataset is updated at least after a change carried out to the trading unit and/or after a change in the amount and/or condition of the print substrate provided in this trading unit.

4. Method according to Claim 1, **characterized in that** an updating of the dataset is carried out only after a legitimization and/or authentication of a data sender changing the dataset.

5. Method according to Claim 1, **characterized in that** at least for a part of the data stored in the memory of the RFID tag access rights and/or permissions are set for its writing and/or reading off.

6. Method according to Claim 1, **characterized in that** at least a part of the data is exchanged in encrypted form with a writing and/or reading station (17).

7. Method according to Claim 1, **characterized in that** in the dataset the data is stored with respect to its syntax and semantics according to a standard used in the logistics operation.

8. Method according to Claim 1, **characterized in that** the RFID tag for the data exchange with the writing and/or reading station (17) uses a standardized protocol.

9. Method according to Claim 1, **characterized in that** the trading unit is sent by a paper mill (01).

10. Method according to Claim 1, **characterized in that** data of the dataset is exchanged with an at least one store (06) of a logistics system (09) managing the printing works (03).

11. Method according to Claim 10, **characterized in that** data of the dataset exchanged with the logistics system (09) is transferred to a control station (18) belonging to the printing machine (12).

12. Method according to Claim 1, **characterized in that** data connected with a control or regulation of the printing machine (12) is transferred to at least one writing and/or reading station (17) arranged in the printing works (03) for storage in the memory of the RFID tag.

13. Method according to Claim 12, **characterized in that** the data connected with the control or regulation of the printing machine (12) is transferred by means of the control station (18) of the printing machine (12) to at least one writing and/or reading station (17) arranged in the printing works (03) for storage in the memory of the RFID tag.

14. Method according to Claim 1, **characterized in that** data of the dataset is exchanged in a data network involving at least the paper factory (01) dispatching the print substrate and the printing works (03) receiving the print substrate.

15. Method according to Claim 1, **characterized in that** the dataset for control and regulation tasks is used within the handling chain connected with this trading unit or with the print substrate.

16. Method according to Claim 1, **characterized in that** the print substrate is wound around a winding core of the paper roll, the RFID tag being installed in or on this winding core.

17. Method according to Claim 1, **characterized in that** the RFID tag is provided with its own energy supply.

18. Method according to Claim 1, **characterized in that** an electromagnetic microwave with a frequency of at least 300 MHz is used for the data exchange between the RFID tag and the writing and/or reading station (17).

19. Method according to Claim 1, **characterized in that** the RFID tag uses a sending and/or receiving frequency in a frequency band lying at 433 MHz, 868 MHz, 915 MHz, 2.45 GHz or 5.6 GHz.

20. Method according to Claim 1, **characterized in that** data for the paper machine used for the production of the paper roll, for the production series, for the roll number, for the production date and/or for the drum position is written into the dataset.

21. Method according to Claim 1, **characterized in that** data for the type of packaging and/or for the dispatch and/or for the customer of the print substrate is written into the dataset.

22. Method according to Claim 1, **characterized in that** data for the storage location provided in the store (06) of the printing works (03) is written into the dataset.

23. Method according to Claim 1, **characterized in that** data for the gross and/or net weight of the trading unit and/or of the print substrate is written into the dataset.

24. Method according to Claim 1, **characterized in that** data for the print substrate colour and/or for the print substrate length and/or for the print substrate width and/or for the grammage of the print substrate is written into the dataset.

25. Method according to Claim 1, **characterized in that** data of the datasets is used for adjusting and/or for running an unpacking station (13) unpacking the print substrate.

26. Method according to Claim 1, **characterized in that** data of the dataset is used for adjusting and/or tracking a pair of support arms of a roll changer (11) belonging to the printing machine (12).

27. Method according to Claim 26, **characterized in that** for adjusting the pair of support arms of the roll changer (11) a linkage of data of the dataset of the RFID tag with data of a control system controlling the roll changer (11) is used, the data of the control system controlling the roll changer (11) being provided by at least one sensor and/or at least one position transmitter and giving information about a position of a paper roll to be aligned axially relative to the pair of support arms of the roll changer (11).

28. Method according to Claim 1, **characterized in that** data is written into the dataset which documents the formation of an adhesive surface on a paper roll to be newly introduced into the printing production and/or the point in time for the formation of this adhesive surface.

29. Method according to Claim 1, **characterized in that** after or during a use of the print substrate provided with the trading unit in a production of the printing machine (12) data for the use of the print substrate provided with this trading unit is written into the dataset.

30. Method according to Claim 1, **characterized in that** after or during a use of the print substrate provided with the trading unit in a production of the printing machine (12) data for the remaining amount of the print substrate provided with this trading unit are written into the dataset.

31. Method according to Claim 1, **characterized in that** an only partially used paper roll is removed from the roll changer (11) and is put back into the store (06).

32. Method according to Claim 1, **characterized in that** the winding core of the paper roll is used for a fresh winding with print substrate after an at least partial use of the print substrate wound onto the winding core.

33. Method according to Claim 1, **characterized in that** data for the side register positioning and/or web control are written into the dataset of an only partially used paper roll.

34. Method according to Claim 1, **characterized in that** all changes to the respective trading unit and/or all effects on the print substrate provided using this trading unit are continuously logged in the dataset.

35. Method according to Claim 1, **characterized in that** during the production carried out by the printing machine (12) the print substrate is at least drawn into the printing machine (12).

36. Method according to Claim 1, **characterized in that** during the production carried out by the printing machine (12) the print substrate is printed.

## Revendications

1. Procédé de production et d'utilisation d'un document d'accompagnement d'un support d'impression à traiter dans une machine à imprimer (12), le document d'accompagnement se présentant sous la forme d'un enregistrement électronique stocké dans une mémoire d'une étiquette RFID, l'étiquette RFID étant appliquée sur une unité commerciale rendant disponible le support d'impression, une bobine de papier étant utilisée comme unité commerciale, l'enregistrement accompagnant le support d'impression au moins sur son trajet du site de son fabricant et/ou fournisseur vers la machine à imprimer (12) traitant ledit support d'impression, au moins des données sur le fabricant du support d'impression et/ou sur son fournisseur, ainsi que des données sur la fabrication du support d'impression étant portées dans ledit enregistrement, **caractérisé en ce que**, dans le cas d'une unité commerciale avec un support d'impression qui n'est que partiellement utilisé lors d'une production de la machine à imprimer (12), l'enregistrement est complété au moins par des données caractérisant un événement, l'événement concernant une déchirure du support d'impression et/ou un endommagement de l'unité commerciale et étant apparu pendant la production effectuée par la machine à imprimer (12) avec le support d'impression de ladite unité commerciale, des données ayant un impact sur la possibilité de traitement ultérieur du support d'impression étant portées dans l'enregistrement, une décision relative à l'admission dudit support d'impression pour le traitement ultérieur envisagé étant prise après lecture desdites données en comparaison avec un modèle de consigne correspondante, la bobine de papier concernée étant exclue d'une réception par un changeur de bobine ou d'une accélération à une vitesse de rotation élevée sur le changeur de bobine si les critères pour l'admission de la bobine de papier au processus de production ne sont pas satisfaits.

2. Procédé selon la revendication 1, **caractérisé en ce que** l'enregistrement actualisé est évalué par une imprimerie (03) exploitant la machine à imprimer (12) et/ou après renvoi de l'étiquette RFID au fabricant du support d'impression rendu disponible avec l'unité commerciale pour une procédure de réclamation et/ou un retour.

3. Procédé selon la revendication 1, **caractérisé en ce que** l'enregistrement est mis à jour au moins après une modification effectuée sur l'unité commerciale et/ou après modification de la quantité et/ou de la qualité pour le support d'impression rendu disponible dans ladite unité commerciale.

4. Procédé selon la revendication 1, **caractérisé en ce qu'**une mise à jour de l'enregistrement n'est effectuée qu'après légitimation et/ou authentification d'un émetteur de données modifiant l'enregistrement.

5. Procédé selon la revendication 1, **caractérisé en ce que** des droits d'accès et/ou des autorisations sont définis pour au moins une partie des données stockées dans la mémoire de l'étiquette RFID, pour la lecture et/ou l'écriture de celles-ci.

6. Procédé selon la revendication 1, **caractérisé en ce qu'**au moins une partie des données est échangée de manière cryptée avec une station de lecture et/ou d'écriture (17).

7. Procédé selon la revendication 1, **caractérisé en ce que**, dans l'enregistrement, les données sont mémorisées conformément à un standard utilisé en logistique quant à leur syntaxe et à leur sémantique.

8. Procédé selon la revendication 1, **caractérisé en ce que** l'étiquette RFID utilise un protocole standardisé pour l'échange de données avec la station de lecture et/ou d'écriture (17).

9. Procédé selon la revendication 1, **caractérisé en ce que** l'unité commerciale est envoyée par une usine à papier (01).

10. Procédé selon la revendication 1, **caractérisé en ce que** des données de l'enregistrement sont échangées avec au moins un entrepôt (06) de l'imprimerie (03) administré par un système logistique (09).

11. Procédé selon la revendication 10, **caractérisé en ce que** des données de l'enregistrement échangées avec le système logistique (09) sont transmises à un pupitre de commande (18) faisant partie de la machine à imprimer (12).

12. Procédé selon la revendication 1, **caractérisé en ce que** des données reliées à une commande ou à une régulation de la machine à imprimer (12) sont transmises à au moins une station de lecture et/ou d'écriture (17) présente dans l'imprimerie (03) pour stockage dans la mémoire de l'étiquette RFID.

13. Procédé selon la revendication 12, **caractérisé en ce que** les données reliées à une commande ou à une régulation de la machine à imprimer (12) sont transmises par l'intermédiaire du pupitre de commande (18) de la machine à imprimer (12) à au moins une station de lecture et/ou d'écriture (17) présente dans l'imprimerie (03) pour stockage dans la mémoire de l'étiquette RFID.

14. Procédé selon la revendication 1, **caractérisé en ce que** des données de l'enregistrement sont échangées dans un réseau de données intégrant au moins l'usine à papier (01) envoyant le support d'impression et l'imprimerie (03) recevant le support d'impression.

15. Procédé selon la revendication 1, **caractérisé en ce que** l'enregistrement est utilisé pour des tâches de commande et de régulation à l'intérieur de la chaîne de manipulation reliée à ladite unité commerciale ou au support d'impression.

16. Procédé selon la revendication 1, **caractérisé en ce que** le support d'impression est enroulé autour d'un mandrin de la bobine de papier, l'étiquette RFID étant appliquée sur ou dans ledit mandrin.

17. Procédé selon la revendication 1, **caractérisé en ce que** l'étiquette RFID est pourvue d'une alimentation en énergie propre.

18. Procédé selon la revendication 1, **caractérisé en ce qu'**une micro-onde électromagnétique avec une fréquence d'au moins 300 MHz est utilisée pour l'échange de données entre l'étiquette RFID et la station de lecture et/ou d'écriture (17).

19. Procédé selon la revendication 1, **caractérisé en ce que** l'étiquette RFID utilise une fréquence d'émission et/ou de réception comprise dans une bande de fréquence de 433 MHz, 868 MHz, 915 MHz, 2,45 GHz ou 5,6 GHz.

20. Procédé selon la revendication 1, **caractérisé en ce que** des données sur la fabrication de la machine à papier utilisant la bobine de papier, sur la série de production, le numéro de bobine, la date de production et/ou la position de tambour sont portées dans l'enregistrement.

21. Procédé selon la revendication 1, **caractérisé en ce que** des données sur le type d'emballage et/ou sur l'envoi et/ou sur le client du support d'impression sont portées dans l'enregistrement.

22. Procédé selon la revendication 1, **caractérisé en ce que** des données sur le site de stockage prévu pour le support d'impression dans l'entrepôt (06) de l'imprimerie (03) sont portées dans l'enregistrement.

23. Procédé selon la revendication 1, **caractérisé en ce que** des données sur le poids net et/ou brut de l'unité commerciale et/ou du support d'impression sont portées dans l'enregistrement.

24. Procédé selon la revendication 1, **caractérisé en ce que** des données sur la couleur du support d'impression et/ou sur la longueur du support d'impression et/ou sur la largeur du support d'impression et/ou sur le grammage du support d'impression sont portées dans l'enregistrement.

25. Procédé selon la revendication 1, **caractérisé en ce que** des données de l'enregistrement relatives au réglage et/ou à la commande d'une station de déballage (13) déballant le support d'impression sont exploitées.

26. Procédé selon la revendication 1, **caractérisé en ce que** des données de l'enregistrement relatives au réglage et/ou au suivi d'une paire de bras supports d'un changeur de bobine (11) faisant partie de la machine à imprimer (12) sont exploitées.

27. Procédé selon la revendication 26, **caractérisé en ce que** pour le réglage de la paire de bras supports du changeur de bobine (11), il est recouru à un chaînage de données de l'enregistrement de l'étiquette RFID avec des données d'un système de commande commandant le changeur de bobine (11), les données du système de commande commandant le changeur de bobine (11) étant délivrées par au moins un capteur et/ou au moins un capteur de position, et donnant une information sur une position d'une bobine de papier dont l'axe doit être aligné par rapport à la paire de bras supports du changeur de bobine (11).

28. Procédé selon la revendication 1, **caractérisé en ce que** des données sont portées dans l'enregistrement, lesquelles documentent la formation d'une surface de collage sur une nouvelle bobine de papier à mettre en oeuvre pour la production imprimée et/ou le moment de formation de ladite surface de collage.

29. Procédé selon la revendication 1, **caractérisé en ce que** pendant ou après une utilisation du support d'impression préparé avec l'unité commerciale lors d'une production de la machine à imprimer (12), des données relatives à l'utilisation du support d'impression préparé avec ladite unité commerciale sont portées dans l'enregistrement.

30. Procédé selon la revendication 1, **caractérisé en ce que** pendant ou après une utilisation du support d'impression préparé avec l'unité commerciale lors d'une production de la machine à imprimer (12), des données relatives à la quantité restante pour le support d'impression mis à disposition avec ladite unité commerciale sont portées dans l'enregistrement.

31. Procédé selon la revendication 1, **caractérisé en ce qu'**une bobine de papier qui n'est que partiellement consommée est retirée du changeur de bobine (11) et ramenée vers l'entrepôt (06).

32. Procédé selon la revendication 1, **caractérisé en ce que** le mandrin de la bobine de papier est employé pour un nouvel enroulement de support d'impression, après une consommation au moins partielle du support d'impression enroulé sur le mandrin.

33. Procédé selon la revendication 1, **caractérisé en ce que** des données sur le positionnement de repère latéral et/ou le réglage de bande sont portées dans l'enregistrement d'une bobine de papier qui n'est que partiellement consommée.

34. Procédé selon la revendication 1, **caractérisé en ce que** toutes les modifications d'unité commerciale et/ou toutes les interventions sur le support d'impression mis à disposition avec ladite unité commerciale sont couramment consignées dans l'enregistrement.

35. Procédé selon la revendication 1, **caractérisé en ce que**, pendant la production effectuée par la machine à imprimer (12), le support d'impression est tiré au moins dans la machine à imprimer (12).

36. Procédé selon la revendication 1, **caractérisé en ce que** le support d'impression est imprimé pendant la production effectuée par la machine à imprimer (12).
